Europäisches Patentamt

European Patent Office

Office européen des brevets

(19)

(11) **EP 0 544 766 B1**

(12)

# EUROPEAN PATENT SPECIFICATION

(45) Date of publication and mention
of the grant of the patent:
**04.12.1996  Bulletin 1996/49**

(21) Application number: **91915399.9**

(22) Date of filing: **14.08.1991**

(51) Int Cl.⁶: **C10G 47/12**, C10G 47/20

(86) International application number:
**PCT/US91/05821**

(87) International publication number:
**WO 92/03519 (05.03.1992 Gazette 1992/06)**

(54) **A PROCESS FOR PREPARING MIDDLE DISTILLATES USING A COMBINATION OF AN INTERMEDIATE PORE SIZE SILICOALUMINOPHOSPHATE MOLECULAR SIEVE CATALYST AND A HYDROCRACKING CATALYST FOR SECOND STAGE HYDROCRACKING**

VERFAHREN ZUR HERSTELLUNG VON MITTELDESTILLATEN UNTER VERWENDUNG EINER KOMBINATION EINES SILICOALUMINOPHOSPHAT-MOLEKULARSIEBKATALYSATORS MIT MITTLERER PORENGRÖSSE UND EINES HYDROKRACKKATALYSATORS FÜR HYDROKRACKEN IN DER ZWEITEN STUFE

PROCEDE DE PREPARATION DE DISTILLAT MOYEN UTILISANT UNE COMBINAISON D'UN CATALYSEUR COMPRENANT UN TAMIS MOLECULAIRE DE SILICOALUMINOPHOSPHATE A TAILLE DES PORES INTERMEDIAIRE ET UN CATALYSEUR D'HYDROCRAQUAGE POUR UN HYDROCRAQUAGE DE SECOND ETAGE

(84) Designated Contracting States:
**BE DE FR GB IT NL**

(30) Priority: **21.08.1990  US 570376**

(43) Date of publication of application:
**09.06.1993  Bulletin 1993/23**

(73) Proprietor: **CHEVRON U.S.A. Inc.
Philadelphia Pennsylvania 19103 (US)**

(72) Inventor: **MILLER, Stephen, J.
San Francisco, CA 94121 (US)**

(74) Representative: **Nash, David Allan
Haseltine Lake & Co.
28 Southampton Buildings
Chancery Lane
London WC2A 1AT (GB)**

(56) References cited:
| | |
|---|---|
| WO-A-91/02782 | WO-A-91/13132 |
| US-A- 3 535 225 | US-A- 4 419 271 |
| US-A- 4 859 312 | US-A- 4 906 351 |
| US-A- 4 913 798 | US-A- 4 913 799 |
| US-A- 4 960 504 | US-A- 4 976 847 |
| US-A- 4 992 160 | |

**Description**

**BACKGROUND OF THE INVENTION**

1. Field of the Invention.

The present invention relates to a hydrocracking and isomerization process for preparing middle distillates. More specifically, the invention relates to a process for preparing low pour point middle distillate hydrocarbons by contacting a hydrocarbonaceous feedstock with a catalyst comprising an intermediate pore size silicoaluminophosphate molecular sieve and a hydrogenation component in combination with a hydrocracking catalyst in the second stage of a hydrocracker.

2. State of the Art.

Hydrocracking, used either in a one-step process or in a multistep process coupled with hydrodenitrification and/ or hydrodesulfurization steps, has been used extensively to upgrade poor-quality feedstocks and to produce middle distillate materials. Over the years, much development work has been conducted to identify improved cracking conditions and catalysts. Tests have been carried out using catalysts containing zeolites composited with amorphous materials.

Large pore size zeolites such as zeolites X and Y are presently considered the most active hydrocracking catalysts. However, high activity is not the only essential characteristic of midbarrel cracking in catalysts. Midbarrel selectivity, namely, the percentage of total conversion accounted for by products boiling within the midbarrel range of from about 300°F to about 725°F is also important. As noted in U.S. Patent No. 3,853,742, many commercial midbarrel hydrocracking processes do not use zeolitic catalysts due to their relatively low midbarrel selectivity.

Also, middle distillates conventionally serve as fuels such as diesel oils, jet fuels, furnace oils, and the like. For convenience in the handling and in the use of these middle distillates, it is desirable that the pour point be as low as practical consistent with the temperatures to which they may be exposed. Specifications for these products often include a requirement that the pour point not exceed a certain maximum value. In some instances, it is necessary to subject these distillate fuels to additional processing whose principle purpose is to reduce the pour point of the feedstream. Pour point can also be lowered by lowering the distillate end point, but this reduces yield.

As noted in U.S. Patent No. 4,486,296, zeolite catalysts have been employed in hydrocracking processes. Although such zeolite catalysts may be effective in providing distillate yields having one or more properties consistent with the intended use of the distillate, these catalysts suffer the disadvantage of not providing product yields having good low temperature fluidity characteristics, especially reduced pour point, reduced cloud point and acceptably low viscosity.

In view of such poor fluidity characteristics, the prior art has incorporated dewaxing processes to reduce the pour point and cloud point of the middle distillate using selective intermediate pore size zeolites such as ZSM-5 and ZSM-23 either as a separate post-treatment step for the middle distillate (U.S. Patent No. RE. 28,398 and European Patent Application No. 0092376) or in a sequential process (U.S. Patent No. 3,758,402) wherein the feedstock is first subjected to hydrocracking and then to dewaxing in a continuous process using a large pore size zeolite hydrocarbon cracking catalyst such as zeolite X or zeolite Y and an intermediate pore zeolite dewaxing zeolite catalyst, such as ZSM-5. However, such dewaxing is accompanied by an increase in viscosity of the so treated middle distillate feedstream, possibly to unacceptable levels. Specifically, in the dewaxing of middle distillates by ZSM catalysts, significant amounts of low viscosity but waxy n-paraffins are cracked to gaseous products. While such cracking eliminates such waxy components from the middle distillate, cracking also eliminates these low viscosity components from the middle distillates which results in the net increase in viscosity of the so treated middle distillate feedstream stream as well as a net decrease in the overall distillate yield.

While it has heretofore been proposed that hydrocracking a feedstock with a silicoaluminophosphate catalyst will provide a middle distillate product having satisfactory pour point and viscosity (U.S. Patent No. 4,859,312), such catalysts suffer the drawback that they have difficulty in effecting significant hydrocracking of large, high boiling components such as high molecular weight multiple ring compounds including highly condensed polycyclic aromatic compounds. Accordingly, feedstocks that contain a significant portion of such compounds will provide reduced middle distillate yields when treated with a silicoaluminophosphate catalyst as compared to feedstocks having little or no concentration of such compounds. On the other hand, most feedstocks suitable for use in hydrocracking processes are generally heavy feedstocks that can contain a significant portion of such multiple ring compounds. Moreover, some hydrocracking processes involve the recycling of unreacted products back into the feedstocks entering the hydrocracker which, when such silicoaluminophosphate catalysts are employed as the hydrocracking catalysts, will result in the accumulation of high molecular weight multiple ring compounds in the feedstock. This, in turn, can ultimately lead to reactor shutdown due to low yield.

2

In view of the above, it would be particularly advantageous to develop a hydrocracking process which could effectively hydrocrack the feedstock, including any high molecular weight multiple ring components in the feedstock, as well as which could provide for a middle distillate having an acceptable pour point, cloud point and viscosity without the concomitant loss of distillate yields.

## SUMMARY OF THE INVENTION

The present invention overcomes the problems and disadvantages of the prior art by employing a hydrocracking process which utilizes both a large-pore hydrocracking catalyst and an intermediate pore size silicoaluminophosphate molecular sieve containing a hydrogenation component. By using such a process, the feedstock, including any high molecular weight multiple ring compounds contained therein, are readily hydrocracked, mainly by the large-pore hydrocracking catalyst, to provide for a middle distillate having acceptable viscosity. Additionally, the waxy n-paraffin constituents in the middle distillate are selectively converted by the silicoaluminophosphate catalyst to non-waxy liquid materials without significantly changing their boiling range or their viscosity. Accordingly, yields and product viscosities are essentially unchanged by the conversion, while the pour point of the middle distillate is significantly reduced.

Accordingly, in one of its process aspects, the present invention is directed to a process for preparing middle distillate hydrocarbons which process comprises hydrocracking a denitrogenated hydrocarbonaceous feedstock comprising 50 ppm or less nitrogen wherein at least 90 percent of said feedstock boils above 316°C (600°F) with a large-pore hydrocracking catalyst in combination with a catalyst comprising a molecular sieve containing $AlO_2$ and $PO_2$ tetrahedral units and at least one hydrogenation component, wherein said molecular sieve is selected from (i) an intermediate pore size silicoaluminophosphate molecular sieve and (ii) an intermediate pore size nonzeolitic molecular sieve containing $AlO_2$ and $PO_2$ tetrahedral units; and recovering a hydrocarbonaceous effluent which boils above 149°C (300°F) and below 385°C (725°F).

The present invention is directed to a process for preparing low pour point middle distillate hydrocarbons by hydrocracking and isomerizing a denitrogenated hydrocarbonaceous feedstock comprising 50 ppm or less nitrogen wherein at least 90% of said feedstock has a boiling point above 316°C (600°F) which process comprises:

(a) contacting under hydrocracking conditions said hydrocarbonaceous feedstock with a large-pore hydrocracking catalyst in combination with a catalyst comprising a molecular sieve containing $AlO_2$ and $PO_2$ tetrahedral units and at least one hydrogenation component, wherein said molecular sieve is selected from (i) an intermediate pore size silicoaluminophosphate molecular sieve and (ii) an intermediate pore size nonzeolitic molecular sieve containing $AlO_2$ and $PO_2$ tetrahedral units; and
(b) recovering a hydrocarbonaceous effluent, wherein more than 40% by volume of said effluent boils above 149°C (300°F) and below 385°C (725°F) and has a pour point below -6.6°C (20°F).

Accordingly, by using a catalyst comprising an intermediate pore size silicoaluminophosphate or nonzeolitic molecular sieve and at least one hydrogenation component in combination with a large-pore hydrocracking catalyst in second-stage hydrocracking, the processes of the present invention can prepare middle distillate hydrocarbons from feedstocks including feedstocks containing high molecular weight multiple ring compounds. A high liquid yield is obtained and the middle distillates so produced have acceptable viscosity, pour points and cloud points.

Additionally, because the processes of the present invention are capable of hydrocracking high molecular weight multiple ring compounds, these processes are particularly suitable for recycle operations.

By lowering the pour point and the cloud point, the recycle cut point, i.e., the boiling point which separates the lighter boiling product from the bottoms which are recycled, can be raised without exceeding cloud point and pour point specifications. By raising the recycle cut point, increased yield can be obtained.

In the processes of the invention, the hydrocarbon feedstock is contacted with the catalysts under conversion conditions which are appropriate for hydrocracking. During conversion, the hydrocracking catalyst causes the aromatics and naphthenes which are present in the feedstock to undergo hydrocracking reactions such as dealkylation, ring opening, and cracking, followed by hydrogenation. Additionally, during conversion, the catalyst comprising the intermediate pore size silicoaluminophosphate molecular sieve causes the long chain paraffins present in the feedstock to undergo mild cracking reactions. The cracked products from this reaction are of higher molecular weight than compared to products obtained using prior art dewaxing zeolitic catalysts such as ZSM-5. At the same time, a measure of isomerization takes place over the catalyst comprising the intermediate pore size silicoaluminophosphate molecular sieve and hydrogenation component so that n-paraffins become isomerized to non-waxy isoparaffins.

The pour and cloud point of the reaction products are reduced by both the cracking and isomerization reactions described above. The non-waxy paraffins and isoparaffins retained in the liquid-range products contribute to low pour point and low cloud point products having acceptable viscosity. In contrast, prior art dewaxing processes using ZSM catalysts effect dewaxing of middle distillates in a manner that results in an increase in the viscosity of the so treated

3

middle distillates.

Thus, the processes of the present invention are capable of effecting bulk conversion to middle distillates together with simultaneous dewaxing. It is also possible to operate at partial conversion, thus effecting economies in hydrogen consumption while still meeting pour point and viscosity requirements.

Overall, the processes of the present invention achieves enhanced selectivity for the production of middle distillate range materials wherein greater than about 40% by weight of the converted products boil in the middle distillate range wherein such middle distillate products have acceptable pour points, cloud points and viscosity. Further, the yield of gas and products boiling below the distillate range is reduced.

The accompanying drawings, which are incorporated in and constitute a part of this specification, illustrate exemplary embodiments of the invention and together with the description, serve to explain the principles of the invention.

## BRIEF DESCRIPTION OF THE DRAWINGS

FIG. 1 is a ternary diagram showing the compositional parameters of the silicoaluminophosphates of U.S. Patent No. 4,440,871 in terms of mole fractions of silicon, aluminum, and phosphorus.

FIG. 2 is a ternary diagram showing the preferred compositional parameters of the silicoaluminophosphates in terms of mole fractions of silicon, aluminum, and phosphorus.

FIG. 3 is a graph showing the cloud point of the 482°F+ diesel product versus percent diesel yield when hydrocracking a hydrodenitrified vacuum gas oil over a hydrocracking catalyst alone as well as the combined catalysts of this invention.

## DESCRIPTION OF THE PREFERRED EMBODIMENTS

Reference will now be made in detail to the present preferred embodiments of the invention, examples of which are illustrated in the accompanying drawings.

Feedstocks

Exemplary suitable feedstocks for use in the process of the invention include heavy hydrocarbon oils such as gas oil, coker tower bottoms fraction, reduced crude, vacuum tower bottoms, deasphalted vacuum resids, FCC tower bottoms, and cycle oils. Oils derived from coal, shale, or tar sands may also be employed. Such oils generally boil above 600°F (316°C) although oils which have initial boiling points as low as about 436°F (260°C) may also be employed. Preferably, at least 90% of the feedstock will boil above 600°F (316°C) and most preferably at least 90% of the feedstock will boil between 700°F (371°C) and 1200°F (649°C). These heavy oils comprise high molecular weight long-chain paraffins (i.e., $C_{10}$ and higher paraffins) and high molecular weight multiple ring compounds (i.e., $C_{10}$ and greater, e. g., two or more rings including aromatic and saturated compounds such as naphthalene, anthracene, decalin, and the like) with a large proportion of high molecular weight fused ring aromatic compounds (i.e., two or more fused rings, e. g., napthalene, anthracene, etc.). In general, such feedstocks contain at least 10 percent by weight and preferably, at least 20 percent by weight of such high molecular weight multiple ring compounds.

During processing, the high molecular weight multiple ring compounds and naphthene compounds are primarily cracked by the large-pore hydrocracking catalyst; whereas the long-chain paraffin compounds are cracked by both the large-pore hydrocracking catalyst and the silicoaluminophosphate catalyst. Additionally, a substantial fraction of the long-chain paraffinic compounds found in the initial feedstock also undergo conversion to isoparaffins over the silicoaluminophosphate containing catalysts.

As discussed hereinafter, the catalysts employed in the processes of this invention do not tolerate feedstocks containing high levels of nitrogen, e.g., feedstocks containing greater than about 50 ppm nitrogen. Accordingly, in a first stage, denitrification of the feedstock to levels of about 50 ppm or less nitrogen is accomplished. Preferably, such denitrification is accompanied by desulfurization of the feedstock.

The processes of the present invention combine elements of hydrocracking and isomerization and accordingly, employ an isomerization catalyst and a hydrocracking catalyst. The isomerization catalyst employed herein is an acidic intermediate pore size silicoaluminophosphate molecular sieve having a hydrogenation component; whereas the hydrocracking catalyst employed herein is any large-pore catalyst capable of hydrocracking a feedstock as described above including feedstocks containing high molecular weight multiple ring compounds. These catalysts are described below.

A. Intermediate Pore Size Silicoaluminophosphate Containing a Hydrogenation Component

As noted above, one of the catalysts used in the process of the present invention is an acidic intermediate pore size silicoaluminophosphate molecular sieve containing a hydrogenation component. Exemplary suitable sieves are described in U.S. Patent No. 4,440,871.

The most preferred silicoaluminophosphate molecular sieves (SAPOs) suitable for use in the instant process are SAPO-11, SAPO-31, and SAPO-41 which comprise a molecular framework of corner-sharing $[SiO_2]$ tetrahedra, $[AlO_2]$ tetrahedra and $[PO_2]$ tetrahedra, [i.e., $(Si_xAl_yP)O_2$ tetrahedral units], and which, when combined with a hydrogenation component and a hydrocracking catalyst, convert at effective process conditions the feedstock to middle distillate products.

More specifically, SAPO-11, as referred to herein, comprises a silicoaluminophosphate material having a three-dimensional microporous crystal framework structure of $[PO_2]$, $[AlO_2]$ and $[SiO_2]$ tetrahedral units whose unit empirical formula on an anhydrous basis is:

$$mR:(Si_xAl_yP_z)O_2 \qquad\qquad (1)$$

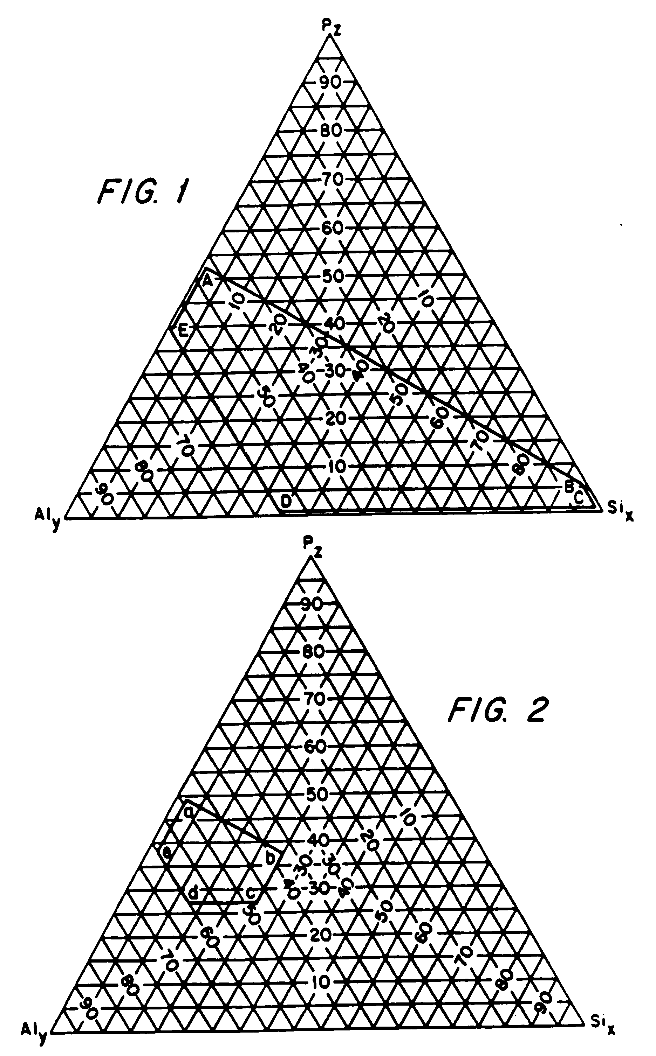

wherein "R" represents at least one organic templating agent present in the intracrystalline pore system; "m" represents the moles of "R" present per mole of $(Si_xAl_yP_z)O_2$ and has a value of from zero to about 0.3, "x", "y" and "z" represent respectively, the mole fractions of silicon, aluminum and phosphorus, said mole fractions being within the compositional area bounded by points A, B, C, D and E on the ternary diagram of FIG. 1, or preferably within the area bounded by points a, b, c, d, and e on the ternary diagram of FIG. 2, said silicoaluminophosphate having a characteristic X-ray powder diffraction pattern which contains at least d-spacings (as-synthesized and calcined) set forth below in Table I. When SAPO-11 is in the as-synthesized form, "m" preferably has a value of from 0.02 to 0.3.

TABLE I

| 2Θ | d (Å) | Relative Intensity |
|---|---|---|
| 9.4-9.65 | 9.41-9.17 | m |
| 20.3-20.6 | 4.37-4.31 | m |
| 21.0-21.3 | 4.23-4.17 | vs |
| 22.1-22.35 | 4.02-3.99 | m |
| 22.5-22.9 (doublet) | 3.95-3.92 | m |
| 23.15-23.35 | 3.84-3.81 | m-s |

All of the as-synthesized SAPO-11 compositions for which X-ray powder diffraction data have been obtained to date have patterns which are within the generalized pattern of Table II below.

TABLE II

| 2Θ | d | 100 x $I/I_o$ |
|---|---|---|
| 8.05-8.3 | 10.98-10.65 | 20-42 |
| 9.4-9.65 | 9.41-9.17 | 36-58 |
| 13.1-13.4 | 6.76-6.61 | 12-16 |
| 15.6-15.85 | 5.68-5.59 | 23-38 |
| 16.2-16.4 | 5.47-5.40 | 3-5 |
| 18.95-19.2 | 4.68-4.62 | 5-6 |
| 20.3-20.6 | 4.37-4.31 | 36-49 |
| 21.0-21.3 | 4.23-4.17 | 100 |
| 22.1-22.35 | 4.02-3.99 | 47-59 |
| 22.5-22.9 (doublet) | 3.95-3.92 | 55-60 |
| 23.15-23.35 | 3.84-3.81 | 64-74 |
| 24.5-24.9 (doublet) | 3.63-3.58 | 7-10 |
| 26.4-26.8 (doublet) | 3.38-3.33 | 11-19 |
| 27.2-27.3 | 3.28-3.27 | 0-1 |
| 28.3-28.5 (shoulder) | 3.15-3.13 | 11-17 |
| 28.6-28.85 | 3.121-3.094 | |
| 29.0-29.2 | 3.079-3.058 | 0-3 |

TABLE II   (continued)

| 2Θ | d | 100 x I/I₀ |
|---|---|---|
| 29.45-29.65 | 3.033-3.013 | 5-7 |
| 31.45-31.7 | 2.846-2.823 | 7-9 |
| 32.8-33.1 | 2.730-2.706 | 11-14 |
| 34.1-34.4 | 2.629-2.607 | 7-9 |
| 35.7-36.0 | 2.515-2.495 | 0-3 |
| 36.3-36.7 | 2.475-2.449 | 3-4 |
| 37.5-38.0 (doublet) | 2.398-2.368 | 10-13 |
| 39.3-39.55 | 2.292-2.279 | 2-3 |
| 40.3 | 2.238 | 0-2 |
| 42.2-42.4 | 2.141-2.132 | 0-2 |
| 42.8-43.1 | 2.113-2.099 | 3-6 |
| 44.8-45.2 (doublet) | 2.023-2.006 | 3-5 |
| 45.9-46.1 | 1.977-1.969 | 0-2 |
| 46.8-47.1 | 1.941-1.929 | 0-1 |
| 48.7-49.0 | 1.870-1.859 | 2-3 |
| 50.5-50.8 | 1.807-1.797 | 3-4 |
| 54.6-54.8 | 1.681-1.675 | 2-3 |
| 55.4-55.7 | 1.658-1.650 | 0-2 |

SAPO-31, as referred to herein, comprises a silicoaluminophosphate having a three-dimensional microporous crystal framework of $[PO_2]$, $[AlO_2]$ and $[SiO_2]$ tetrahedral units whose unit empirical formula on an anhydrous basis is:

$$mR: (Si_xAl_yP_z)O_2 \qquad (1)$$

wherein R represents at least one organic templating agent present in the intracrystalline pore system; "m" represents the moles of "R" present per mole of $(Si_xAl_yP_z)O_2$ and has a value of from zero to 0.3; "x", "y" and "z" represent respectively, the mole fractions of silicon, aluminum and phosphorus, said mole fractions being within the compositional area bounded by points A, B, C, D and E on the ternary diagram of FIG. 1, or preferably within the area bounded by points a, b, c, d and e on the ternary diagram of FIG. 2, said silicoaluminophosphate having a characteristic X-ray powder diffraction pattern (as synthesized and calcined) which contains at least the d-spacings set forth below in Table III. When SAPO-31 is in the as-synthesized form, "m" preferably has a value of from 0.02 to 0.3.

TABLE III

| 2Θ | d (Å) | Relative Intensity |
|---|---|---|
| 8.5-8.6 | 10.40-10.28 | m-s |
| 20.2-20.3 | 4.40-4.37 | m |
| 21.9-22.1 | 4.06-4.02 | w-m |
| 22.6-22.7 | 3.93-3.92 | vs |
| 31.7-31.8 | 2.823-2.814 | w-m |

All of the as-synthesized SAPO-31 compositions for which X-ray powder diffraction data have presently been obtained have patterns which are within the generalized pattern of Table IV below.

TABLE IV

| 2Θ | d (Å) | 100 x I/I₀ |
|---|---|---|
| 6.1 | 14.5 | 0-1 |
| 8.5-8.6* | 10.40-10.28 | 60-72 |
| 9.5* | 9.31 | 7-14 |

*Possibly contains peak from a minor impurity.

TABLE IV   (continued)

| 2Θ | d (Å) | 100 x I/I_o |
|---|---|---|
| 13.2-13.3* | 6.71-6.66 | 1-4 |
| 14.7-14.8 | 6.03-5.99 | 1-2 |
| 15.7-15.8* | 5.64-5.61 | 1-8 |
| 17.05-17.1 | 5.20-5.19 | 2-4 |
| 18.3-18.4 | 4.85-4.82 | 2-3 |
| 20.2-20.3 | 4.40-4.37 | 44-55 |
| 21.1-21.2* | 4.21-4.19 | 6-28 |
| 21.9-22.1* | 4.06-4.02 | 32-38 |
| 22.6-22.7* | 3.93-3.92 | 100 |
| 23.3-23.35* | 3.818-3.810 | 2-20 |
| 25.1* | 3.548 | 3-4 |
| 25.65-25.75 | 3.473-3.460 | 2-3 |
| 26.5* | 3.363 | 1-4 |
| 27.9-28.0 | 3.198-3.187 | 8-10 |
| 28.7* | 3.110 | 0-2 |
| 29.7 | 3.008 | 4-5 |
| 31.7-31.8 | 2.823-2.814 | 15-18 |
| 32.9-33.0* | 2.772-2.714 | 0-3 |
| 35.1-35.2 | 2.557-2.550 | 5-8 |
| 36.0-36.1 | 2.495-2.488 | 1-2 |
| 37.2 | 2.417 | 1-2 |
| 37.9-38.1* | 2.374-2.362 | 2-4 |
| 39.3 | 2.292 | 2-3 |
| 43.0-43.1* | 2.103-2.100 | 1 |
| 44.8-45.2* | 2.023-2.006 | 1 |
| 46.6 | 1.949 | 1-2 |
| 47.4-47.5 | 1.918 | 1 |
| 48.6-48.7 | 1.873-1.870 | 2 |
| 50.7-50.8 | 1.801-1.797 | 1 |
| 51.6-51.7 | 1.771-1.768 | 2-3 |
| 55.4-55.5 | 1.658-1.656 | 1 |

*Possibly contains peak from a minor impurity.

SAPO-41, as referred to herein, comprises a silicoaluminophosphate having a three-dimensional microporous crystal framework structure of $[PO_2]$, $[AlO_2]$ and $[SiO_2]$ tetrahedral units, and whose unit empirical formula on an anhydrous basis is:

$$mR: (Si_xAl_yP_z)O_2 \tag{1}$$

wherein "R" represents at least one organic templating agent present in the intracrystalline pore system; "m" represents the moles of "R" present per mole of $(Si_xAl_yP_z)O_2$ and has a value of from zero to 0.3; "x", "y" and "z" represent respectively, the mole fractions of silicon, aluminum and phosphorus, said mole fractions being within the compositional area bounded by points A, B, C, D and E on the ternary diagram of FIG. 1, or preferably within the area bounded by points a, b, c, d and e on the ternary diagram of FIG. 2, said silicoaluminophosphate having a characteristic X-ray powder diffraction pattern (as-synthesized and calcined) which contains at least the d-spacings set forth below in Table V. When SAPO-41 is in the as-synthesized form, "m" preferably has a value of from 0.02 to 0.3.

TABLE V

| 2Θ | d (Å) | Relative Intensity |
|---|---|---|
| 13.6-13.8 | 6.51-6.42 | w-m |
| 20.5-20.6 | 4.33-4.31 | w-m |
| 21.1-21.3 | 4.21-4.17 | vs |
| 22.1-22.3 | 4.02-3.99 | m-s |
| 22.8-23.0 | 3.90-3.86 | m |
| 23.1-23.4 | 3.82-3.80 | w-m |
| 25.5-25.9 | 3.493-3.44 | w-m |

All of the as-synthesized SAPO-41 compositions for which X-ray powder diffraction data have presently been obtained have patterns which are within the generalized pattern of Table VI below.

TABLE VI

| 2Θ | d (Å) | 100 x $I/I_o$ |
|---|---|---|
| 6.7-6.8 | 13.19-12.99 | 15-24 |
| 9.6-9.7 | 9.21-9.11 | 12-25 |
| 13.6-13.8 | 6.51-6.42 | 10-28 |
| 18.2-18.3 | 4.87-4.85 | 8-10 |
| 20.5-20.6 | 4.33-4.31 | 10-32 |
| 21.1-21.3 | 4.21-4.17 | 100 |
| 22.1-22.3 | 4.02-3.99 | 45-82 |
| 22.8-23.0 | 3.90-3.87 | 43-58 |
| 23.1-23.4 | 3.82-3.80 | 20-30 |
| 25.2-25.5 | 3.53-3.49 | 8-20 |
| 25.5-25.9 | 3.493-3.44 | 12-28 |
| 29.3-29.5 | 3.048-3.028 | 17-23 |
| 31.4-31.6 | 2.849-2.831 | 5-10 |
| 33.1-33.3 | 2.706-2.690 | 5-7 |
| 37.6-37.9 | 2.392-2.374 | 10-15 |
| 38.1-38.3 | 2.362-2.350 | 7-10 |
| 39.6.-39.8 | 2.276-2.265 | 2-5 |
| 42.8-43.0 | 2.113-2.103 | 5-8 |
| 49.0-49.3 | 1.856-1.848 | 1-8 |
| 51.5 | 1.774 | 0-8 |

The unit empirical formula for a SAPO may be given on an "as-synthesized" basis or may be given after an "as-synthesized" SAPO composition has been subjected to some post treatment process, e.g., calcined. The term "as-synthesized" herein shall be used to refer to the SAPO composition(s) formed as a result of the hydrothermal crystallization but before the SAPO composition has been subjected to post treatment to remove any volatile components present therein. The actual value of "m" for a post-treated SAPO will depend on several factors (including the particular SAPO, template, severity of the post-treatment in terms of its ability to remove the template from the SAPO, and the proposed application of the SAPO composition). The value for "m" can be within the range of values as defined for the as-synthesized SAPO compositions although such is generally less than the as-synthesized SAPO unless such post-treatment process adds template to the SAPO so treated. A SAPO composition which is in the calcined or other post-treated form generally has an empirical formula represented by Formula (1), except that the value of "m" is generally less than about 0.02. Under sufficiently severe post-treatment conditions, e.g., roasting in air at high temperature for long periods (over 1 hr.), the value of "m" may be zero or, in any event, the template, R, is undetectable by normal analytical procedures.

The above silicoaluminophosphates are generally synthesized by hydrothermal crystallization from a reaction mixture comprising reactive sources of silicon, aluminum and phosphorus, and one or more organic templating agents. Optionally, alkali metal(s) may be present in the reaction mixture. The reaction mixture is placed in a sealed pressure vessel, preferably lined with an inert plastic material, such as polytetrafluoroethylene, and heated, preferably under autogenous pressure at a temperature of at least about 100°C, preferably between 100°C and 250°C, until crystals of the silicoaluminophosphate product are obtained, usually for a period of from 2 hours to 2 weeks. While not essential to the synthesis of SAPO compositions, it has been found that in general, stirring or other moderate agitation of the reaction mixture and/or seeding the reaction mixture with seed crystals of either the SAPO to be produced, or a topologically similar composition, facilitates the crystallization procedure. The product is recovered by any convenient method such as centrifugation or filtration.

After crystallization, the SAPO may be isolated and washed with water and dried in air. As a result of the hydrothermal crystallization, the as-synthesized SAPO contains within its intracrystalline pore system at least one form of the template employed in its formation. Generally, the template is a molecular species, but it is possible, steric considerations permitting, that at least some of the template is present as a charge-balancing cation. Generally the template is too large to move freely through the intracrystalline pore system of the formed SAPO and may be removed by a post-treatment process, such as by calcining the SAPO at temperatures of between about 200°C and about 700°C so as to thermally degrade the template, or by employing some other post-treatment process for removal of at least part of the template from the SAPO. In some instances, the pores of the SAPO are sufficiently large to permit transport of the template, and, accordingly, complete or partial removal thereof can be accomplished by conventional desorption procedures such as are carried out in the case of zeolites.

The SAPOs are preferably formed from a reaction mixture having a mole fraction of alkali metal cation which is sufficiently low that it does not interfere with the formation of the SAPO composition. Although the SAPO compositions will form if alkali metal cation are present, reaction mixtures, expressed in terms of molar oxide ratios, having the following bulk composition are preferred:

$$aR_2O: (Si_xAl_yP_z)O_2:bH_2O \qquad (2)$$

wherein "R" is a template; "a" has a value great enough to constitute an effective concentration of "R" and is within the range of from greater than zero (0) to about 3; "b" has a value of from zero to 500; "x", "y" and "z" represent the mole fractions, respectively of silicon, aluminum and phosphorus wherein x, y and z each have a value of at least 0.01. The reaction mixture is preferably formed by combining at least a portion of the reactive aluminum and phosphorus sources in the substantial absence of the silicon source and thereafter combining the resulting reaction mixture comprising the aluminum and phosphorus sources with the silicon source. When the SAPOs are synthesized by this method the value of "m" in formula (1) is generally above about 0.02.

Though the presence of alkali metal cations are not preferred, when they are present in the reaction mixture it is preferred to first admix at least a portion of each of the aluminum and phosphorus sources in the substantial absence of the silicon source. This procedure avoids adding the phosphorus source to a highly basic reaction mixture containing the silicon source.

The reaction mixture from which these SAPOs are formed contain one or more organic templating agents (templates) which can be most any of those heretofore proposed for use in the synthesis of aluminosilicates. The template preferably contains at least one element of Group VA of the Periodic Table, particularly nitrogen, phosphorus, arsenic and/or antimony, more preferably nitrogen or phosphorus and most preferably nitrogen. The template contains at least one alkyl, aryl, aralkyl, or alkylaryl group. The template preferably contains from 1 to 8 carbon atoms, although more than eight carbon atoms may be present in the template. Nitrogen-containing templates are preferred, including amines and quaternary ammonium compounds, the latter being represented generally by the formula $R'_4N+$ wherein each R' is an alkyl, aryl, alkylaryl, or aralkyl group; wherein R' preferably contains from 1 to 8 carbon atoms or higher when R' is alkyl and greater than 6 carbon atoms when R' is otherwise, as hereinbefore discussed. Polymeric quaternary ammonium salts such as $[(C_{14}H_{32}N_2)(OH)_2]_x$ wherein "x" has a value of at least 2 may also be employed. The mono-, di- and triamines, including mixed amines, may also be employed as templates either alone or in combination with a quaternary ammonium compound or another template.

Representative templates, phosphorus, aluminum and silicon sources as well as detailed process conditions are more fully described in U.S. Patent No. 4,440,871.

The process of the invention may also be carried out by using a catalyst comprising an intermediate pore size nonzeolitic molecular sieve containing $AlO_2$ and $PO_2$ tetrahedral oxide units, and at least one hydrogenation component in combination with a large-pore hydrocracking catalyst in the second stage of a hydrocracker. Exemplary suitable intermediate pore size nonzeolitic molecular sieves are set forth in European Patent Application No. 158,977.

When used in the present process, the silicoaluminophosphate molecular sieves are employed in admixture with at least one hydrogenation component, such as platinum, palladium, tungsten, vanadium, molybdenum, nickel, cobalt, chromium, and manganese. Combinations of these metals such as cobalt-molybdenum, cobalt-nickel, nickel-tungsten or cobalt-nickel-tungsten, are also useful with many feedstocks. The amount of any one metal ranges from about 0.01% to 10%, preferably from about 0.1% to about 5% by weight of the molecular sieve. Preferred hydrogenation components are platinum and palladium and, when employed, are preferably employed between about 0.1 percent and 1.5 percent by weight of the molecular sieve.

The techniques of introducing catalytically active metals to a molecular sieve are disclosed in the literature, and preexisting metal incorporation techniques and treatment of the molecular sieve to form an active catalyst are suitable, e.g., ion exchange, impregnation or by occlusion during sieve preparation. See, for example, U.S. Patent Nos. 3,236,761; 3,226,339; 3,236,762; 3,620,960; 3,373,109; 4,202,996; and 4,440,871.

The term "hydrogenation metal" as used herein means one or more metals in its elemental state or in some form such as the sulfide or oxide and mixtures thereof. As is customary in the art of catalysis, the terms "active metal or metals" is intended to encompass the existence of such metal in the elementary state or in some form such as the oxide or sulfide as mentioned above. Regardless of the state in which the metallic component actually exists, the concentrations are computed as if they existed in the elemental state.

The physical form of the silicoaluminophosphate catalyst depends on the type of catalytic reactor being employed and may be in the form of a granule or powder, and is desirably compacted into a more readily usable form (e.g., larger agglomerates), usually with a silica or alumina binder for fluidized bed reaction, or pills, prills, spheres, extrudates, or other shapes of controlled size to accord adequate catalyst-reactant contact.

The silicoaluminophosphate molecular sieves may be composited with other materials resistant to the temperatures and other conditions employed in the process. Such matrix materials include active and inactive materials and synthetic or naturally occurring zeolites as well as inorganic materials such as clays, silica and metal oxides. The latter may be either naturally occurring or in the form of gelatinous precipitates, sols or gels including mixtures of silica and metal oxides. Inactive materials suitably serve as diluents to control the amount of conversion in the hydrocracking process so that products can be obtained economically without employing other means for controlling the rate of reaction. The silicoaluminophosphate may be incorporated into naturally occurring clays, e.g., bentonite and kaolin. These materials, i.e., clays, oxides, etc., function, in part, as binders for the catalyst. It is desirable to provide a catalyst having good crush strength, because in petroleum refining the catalyst is often subjected to rough handling. This tends to break the catalyst down into powder-like materials which cause problems in processing.

Naturally occurring clays which can be composited with the catalyst include the montmorillonite and kaolin families, which families include the sub-bentonites, and the kaolins commonly known as Dixie, McNamee, Georgia and Florida clays or others in which the main mineral constituent is halloysite, kaolinite, dickite, nacrite, or anauxite. Fibrous clays such as halloysite, sepiolite and attapulgite can also be used as supports. Such clays can be used in the raw state as originally mined or initially subjected to calcination, acid treatment or chemical modification.

In addition to the foregoing materials, the catalysts may be composited with porous inorganic oxide matrix materials and mixtures of matrix materials such as silica, alumina, titania, magnesia, silica-alumina, silica-magnesia, silica-zirconia, silica-thoria, silica-beryllia, silica-titania, titania-zirconia as well as ternary compositions such as silica-aluminathoria, silica-alumina-titania, silica-alumina-magnesia and silica-magnesia-zirconia. The matrix can be in the form of a cogel.

In a preferred embodiment, the final catalyst will be a composite and includes the silicoaluminophosphate, a platinum or palladium hydrogenation metal component and an inorganic oxide matrix. The preferred silicoaluminophosphate is SAPO-11, the preferred metal component is platinum, and the preferred support is alumina. A wide variety of procedures can be used to combine the molecular sieve with the refractory oxide. For example, the molecular sieve can be mulled with a hydrogel of the oxide followed by partial drying if required and extruding or pelletizing to form particles of the desired shape. Alternatively, the refractory oxide can be precipitated in the presence of the molecular sieve. This is accomplished by increasing the pH of the solution of a refractory oxide precursor such as sodium acuminate or sodium silicate. The combination can then be partially dried as desired, tableted, pelleted, extruded, or formed by other means and then calcined, e.g., at a temperature above 600°F (316°C), usually above 800°F (427°C). Processes which produce larger pore size supports are preferred to those producing smaller pore size supports when cogelling.

B. Hydrocracking Catalyst

As noted above, the other catalyst used in the process of the present invention is a large-pore hydrocracking catalyst capable of hydrocracking a feedstock as described above including feedstocks containing high molecular weight multiple ring compounds. Such hydrocracking catalysts include conventional hydrocracking catalysts heretofore employed in the second-stage of a hydrocracking process.

Hydrocracking catalysts include those having hydrogenation-dehydrogenation activity, and active cracking supports. The support is often a refractory inorganic oxide such as silica-alumina, silica-alumina-zirconia and silica-alumina-titania composites, acid treated clays, cyrstalline aluminosilicate zeolitic molecular sieves such as faujasite, zeolite X, zeolite Y, and the like as well as combinations of the above. Preferably, the support used with the hydrocracking catalyst is non-zeolitic; and preferably the large-pore hydrocracking catalysts have pore sizes of about 10 Å or more and more preferably of about 30 Å or more.

Hydrogenation-dehydrogenation components of the hydrocracking catalyst usually comprise metals selected from Group VIII and Group VI-B of the Periodic Table, and compounds including them. Preferred Group VIII components include cobalt, nickel, platinum and palladium, particularly the oxides and sulfides of cobalt and nickel. Preferred Group VI-B components are the oxides and sulfides of molybdenum and tungsten. Thus, examples of hydrocracking catalysts which are preferred for use in the hydrocracking step are the combinations nickel-tungsten-silica-alumina and nickel-molybdenum-silica-tungsten.

Exemplary suitable hydrocracking catalysts for use in the present invention are described in U.S. Patent Nos. 3,535,225 and 3,493,517.

The intermediate pore size silicoalumino-phosphate molecular sieve containing catalyst is combined with the large-pore hydrocracking catalyst in the second stage of a hydrocracker, for the purpose of providing a product having a large portion of a middle distillate characterized by low pour points, low cloud points and acceptable viscosity. The process of this invention can be carried out by combining the silicoaluminophosphate molecular sieve with the hydrocracking catalyst in a layered bed or a mixed bed. Alternatively, the intermediate pore size silicoaluminophoaphate molecular sieve can be included in the hydrocracking catalyst particles, or a catalyst containing both the silicoaluminophosphate molecular sieve and the hydroprocessing catalyst can be employed. When the hydrocracking catalyst particles contain the silicoaluminophosphate molecular sieve, and the latter contains a noble metal, then preferably the hydrogenation component of the hydrocracking catalyst is also a noble, rather than base, metal. Further, the silicoaluminophosphate molecular sieve and the hydrocracking catalyst can be run in separate reactors. Preferably, the catalysts are employed in discreet layers with the hydrocracking catalyst placed on top (i.e., nearer the feed end of the process) of the silicoaluminophosphate catalyst.

The amount of each catalyst employed depends upon the amount of pour point reduction desired in the final product. In general, the weight ratio of the hydrocracking catalyst to the silicoaluminophosphate molecular sieve containing catalyst is from about 1:5 to about 20:1. When a layered bed system is employed, the catalysts can be run at separate temperatures, which can effect the degree of dewaxing. When separate reactors or separate beds are employed to carry out the process of the invention, the ratio of the catalysts and the temperature at which the process is carried out can be selected to achieve desired pour points.

## Process Conditions

Although the catalysts used in this process exhibit excellent stability, activity and midbarrel selectivity, the reaction conditions must nevertheless be correlated to provide the desired conversion rates while minimizing conversion to less desired lower-boiling products. The conditions required to meet these objectives will depend on catalyst activity and selectivity and feedstock characteristics such as boiling range, as well as organonitrogen and aromatic content and structure. They will also depend on the most judicious compromise of overall activity, i.e., conversion per pass and selectivity. For example, these systems can be operated at relatively high conversion rates on the order of 70, 80 or even 90% conversion per pass. However, higher conversion rates generally result in lower selectivity. Thus, a compromise must be drawn between conversion and selectivity. The balancing of reaction conditions to achieve the desired objectives is part of the ordinary skill of the art.

Reaction temperatures generally exceed 500°F (260°C) and are usually above 600°F (316°C), preferably between 600°F (316°C) and 900°F (482°C). Hydrogen addition rates should be at least 71 standard cubic metres per cubic metre (400 standard cubic feet per barrel), and are usually between 178 and 2670 standard cubic metres per cubic metre (1,000 and 15,000 standard cubic feet per barrel). Reaction pressures exceed 1.5 MPa (200 psig (13.7 bar)) and are usually within the range of from 3.6 to 20.8 MPa (500 to 3000 psig (34.4 to 207 bar)). Liquid hourly space velocities are less than 15, preferably between 0.2 and 10.

The overall conversion rate is primarily controlled by reaction temperature and liquid hourly space velocity. However, selectivity is generally inversely proportional to reaction temperature. It is not as severely affected by reduced space velocities at otherwise constant conversion. Thus, the most desirable conditions for the conversion of a specific feedstock to a predetermined product can be best obtained by converting the feedstock at several different temperatures, pressures, space velocities and hydrogen addition rates, correlating the effect of each of these variables and selecting the best compromise of overall conversion and selectivity.

The conditions should be chosen so that the overall conversion rate will correspond to the production of at least 40%, preferably at least 50% of products boiling below 725°F (385°C), preferably below 725°F and above 300°F. Midbarrel selectivity should be such that at least 40%, preferably at least 50% of the product is in the middle distillate range, preferably below 385°C (725°F) and above 149°C (300°F). The process can maintain conversion levels in excess of 50% per pass at selectivities in excess of 60% to middle distillate products boiling between 300°F (149°C) and 725°F (385°C). Preferably, the pour point of the middle distillate effluent obtained by the process will be below -6.6°C (20°F), more preferably below -17.7°C (0°F), and even more preferably below -28.8°C (-20°F). Preferably, the cloud point of the middle distillate effluent obtained by the process of this invention will be below 4.4°C (40°F), more preferably below -6.6°C (20°F). Again, preferably, the viscosity of the middle distillate effluent obtained by the process of this invention will be about 4 cSt or less (at 40°C).

The process is operated as the second stage of a two-stage hydrocracking scheme in which the first stage removes nitrogen from the feedstock before contact with the middle distillate-producing catalyst. Preferably, the first stage also desulfurizes the feedstock prior to contact with the middle distillate-producing catalyst.

Hydrocracking processes using an intermediate pore size silicoaluminophosphate molecular sieve and a hydrogenation component (U.S. Patent No. 4,859,312) tend to make more gas than a conventional hydrocracking catalyst in order to achieve a certain degree of conversion. In contrast, it has been found that by combining such an intermediate pore size silicoaluminophosphate molecular sieve with a large pore hydrocracking catalyst, fewer light products are produced, thus improving the liquid yield while achieving pour point reduction in the middle distillates. By adjusting the amount of intermediate pore size silicoaluminophosphate molecular sieve catalyst employed, it is possible to control the amount of liquid yield and pour point reduction achieved.

Nitrogen Content of Feedstocks

While the process herein can be practiced with utility when the feedstock contains some organic nitrogen (nitrogen-containing impurities), for example up to about 50 parts per million by weight of organic nitrogen, it is preferred that the organic nitrogen content of the feedstock be less than 50, more preferably less than 10 ppmw. Especially good results, in terms of activity and length of catalyst cycle (period between successive regenerations or start-up and first regeneration), are experienced when the feedstock contains less than 10 ppmw of organic nitrogen. This is surprising in view of the art (see, for example, U.S. Patent No. 3,894,938).

Sulfur Content of Feedstocks

The presence of organic sulfur (sulfur-containing impurities) in the feedstock does not appear to deleteriously affect the desired hydrocracking of the feedstock, for example, in terms of activity and catalyst life. In fact, hydrodesulfurizing the feedstock of organic sulfur is in large part a significant concurrent reaction. However, the resulting product, in general, will contain at least some thiols and/or thioethers as a result of interreaction of hydrogen sulfide and olefinic hydrocarbons in the effluent product stream. Thus, it may be desirable in some instances that the feedstock prior to use in the process herein be hydrofined or hydrotreated for at least a substantial removal of both organic sulfur- and nitrogen-containing compounds.

When a separate hydrodenitrogenation reactor is used, it is desirable to remove, e.g., flash, light gaseous products such as $NH_3$ upstream of the reactor containing the molecular sieve-containing catalyst. If the hydrotreating is performed in the same reactor, the molecular sieve-containing catalyst and hydrocracking catalyst are disposed in one or more layers downstream of an active hydrodenitrogenation catalyst. The single reactor should preferably be operated under hydrotreating conditions sufficient to reduce the organic nitrogen of the feedstock to 10 ppmw or less before the feedstock encounters the molecular sieve-containing layer. The volume of hydrodenitrogenation catalyst relative to molecular sieve-containing catalyst can vary over a wide range, such as from about 0.1 to 1 to 30 to 1, preferably at least 0.2 to 1, more preferably at least 0.5 to 1. The ratio depends upon such parameters as: (a) the organic nitrogen content of the feedstock; (b) the hydrodenitrogenation and hydrocracking activities of the upstream hydrotreating catalyst; and (c) the degree of overall hydrocracking desired.

The upstream hydrotreating catalysts can be any of the conventional catalysts having hydrodenitrogenation and hydrocracking activity. See, for example, U.S. Patent No. 3,401,125. In general, such hydrotreating catalysts are porous composites or inorganic matrix oxides such as alumina, silica, and magnesia, which contain one or more hydrogenation components such as transition elements, particularly elements of Group VIB or Group VIII of the Periodic Table of the Elements. Handbook of Chemistry and Physics, 45th Ed., Chemical Rubber Company. The Group VIB and/or Group VIII or other transition elements can be present as metals, oxides, or sulfides. The hydrotreating catalyst can also contain promoters such as phosphorus, titanium and other materials known in the art, present as metals, oxides or sulfides. The upstream hydrotreating catalyst need not contain a silicoaluminophosphate component. Typical upstream hydrogenation catalysts suitable for use herein contain 10 to 30 wt.% amorphous silica, 20 to 40 wt.% amorphous alumina, 15 to 30 wt.% Group VIB metal oxide, such as $WO_3$, 5 to 15 wt.% Group VIII metal oxide, such as NiO and 2 to 15 wt.% of a promotor oxide, such as $TiO_2$. The hydrotreating catalyst should have an average pore size in the range of about 30 to 200 Angstroms and a surface area of at least about 150 square meters per gram.

The invention will be further clarified by the following examples, which are intended to be purely exemplary of the invention.

**EXAMPLES**

Example 1

A. Comparative Example

Three similar hydrodenitrified vacuum gas oils (Table VII) were hydrocracked in a liquid recycle pilot plant over a sulfided cogelled nickel-tungsten-silica-alumina catalyst containing 7.7 wt.% Ni and 19.4 wt.% W. Product liquid went to a stripping column, with the stripper bottoms recycled for combination with fresh feedstock which was continually added to hold the total feedstock rate constant. The stripping column temperature was adjusted to control the cut point between the stripper overhead (product) and recycle bottoms. The percent conversion (per pass) was calculated as follows:

$$\% \text{ Conversion} = \text{fresh feed rate/total feed rate} \times 100\%$$

The reactor conditions were 15.3 MPa (2200 psig), 1.33 LHSV (total feed), and 801 standard cubic metres per cubic metre (4500 SCF/bbl) once-through $H_2$. Results with this catalyst are shown in Table VIII.

B. SAPO-11 was prepared as described below and identified as such by X-ray diffraction analysis. More specifically, 231.2 g of 85% $H_3PO_4$ were added to 118 g of $H_2O$. To this were slowly added 408.4 g of aluminum isoproxide (($CH_3)_2CHO)_3Al$) and mixed until homogeneous using a Polytron. 60 g of Cab-O-Sil M-5 fumed silica and 120 g $H_2O$ were added to the above with mixing until homogeneous. Synthesis was carried out in a Teflon bottle in an autoclave at 200°C for 5 days.

The anhydrous molar composition of the calcined sieve was:

$$0.37SiO_2:Al_2O_3:P_2O_5$$

The sieve was bound with 35% Catapal alumina and made into 2.5 mm (1/10-inch) extrudate. The extrudate was dried in air for 4 hours at 121°C (250°F), then calcined in air for 2 hours at 232°C (450°F) and 2 hours at 538°C (1000°F). The extrudate was then impregnated by the pore-fill method with 0.5 wt.% Pd using an aqueous solution of $Pd(NH_3)_4$ $(NO_3)_2$. The catalyst was dried for 2 hours at 121°C (250°F), then calcined in air for 2 hours at 232°C (450°F) and 2 hours at 454°C (850°F). It was then crushed to 24-42 mesh.

C. A layered bed of 2 parts (by volume) of the Ni-W-SiO$_2$-Al$_2$O$_3$ catalyst of Example 1A over 1 part of the Pd/SAPO-11 catalyst of Example 1B was used to hydrocrack Feed A of Table VII at the same overall LHSV as in Example IA. The results are given in Table VIII.

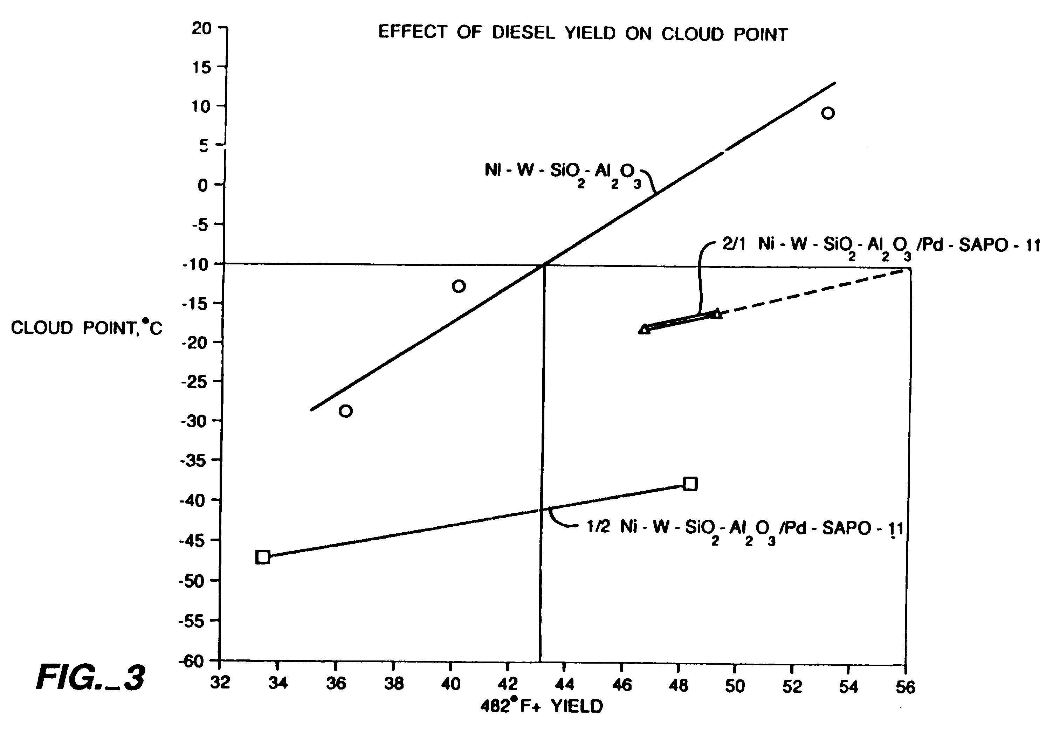

D. A layered bed of 1 part (by volume) of the Ni-W-SiO$_2$-Al$_2$O$_3$ catalyst of Example IA over 2 parts of the Pd/SAPO-11 catalyst of Example IB was used to hydrocrack Feed A of Table I at the same overall LHSV as in Example IA. The results are given in Table VIII. The cloud points for the products of Examples IA-D are plotted versus 250°C+ (482°F+) diesel yield in Figure 3, showing that at constant cloud point, yield can be increased by using the catalyst combination of the present invention. For example, at -10°C cloud point, a 2/1 layered bed of the Ni-W-SiO$_2$-Al$_2$O$_3$ catalyst over the Pd/SAPO-11 catalyst gave a 13 wt% diesel yield increase compared to the Ni-W-SiO$_2$-Al$_2$O$_3$ catalyst alone.

Table VII

| Hydrodenitrified Vacuum Gas Oil Feed Properties | | | |
|---|---|---|---|
| Feed | A | B | C |
| Gravity, API | 38.2 | 38.1 | 32.9 |
| Aniline Point | 119.1°C (246.4°F) | 118.9°C (246.1°F) | 114.7°C (238.4°F) |
| Sulfur, ppm | 0.99 | 0.30 | 0.15 |
| Nitrogen, ppm | 1.82 | 0.72 | 0.47 |
| Pour Point, °C | 52 | 49 | 46 |
| P/N/A | 60.6/34/5.2 | 60.1/34.1/5.7 | 30.3/61.6/8.2 |
| Distillation, D1160, LV% | | | |
| ST/5 | 688/732 | 694/743 | 706/755 |

Table VII   (continued)

| Hydrodenitrified Vacuum Gas Oil Feed Properties | | | |
|---|---|---|---|
| Feed | A | B | C |
| 10/30 | 751/782 | 754/781 | 766/791 |
| 50 | 815 | 813 | 820 |
| 70/90 | 856/928 | 856/925 | 865/940 |
| 95/EP | 966/1024 | 966/1011 | 972/1015 |

# TABLE VIII

**Hydrocracking of Denitrified Vacuum Gas Oil at 15.3 mPa (2200 psig) 1.33 LHSV, 801 m³/m³ (4500 SCF/bbl) Once-through $H_2$ and Recycle Liquid**

| Catalyst | 1/2 Ni-W-SiO₂-Al₂O₃/Pd-SAPO-11 A | A | 2/1 Ni-W-SiO₂-Al₂O₃/Pd-SAPO-11 A | A | C | Ni-W-SiO₂-Al₂O₃ A | B |
|---|---|---|---|---|---|---|---|
| CAT TEMP°C(°F) | 372 700.00 | 365 690.00 | 362 685.00 | 365 690.00 | 351 665.00 | 354 670.00 | 359 675.00 |
| RCP (°F)°C | 346 656.00 | 378 713.00 | 389 733.00 | 380 717.00 | 343 650.00 | 364 688.00 | 389 732.00 |
| % CONV | 49.20 | 38.70 | 53.10 | 55.00 | 43.00 | 47.80 | 52.00 |
| C₂-WT% | 0.38 | 0.49 | 0.32 | 0.32 | 0.57 | 0.29 | 0.47 |
| C₃-WT% | 2.05 | 2.29 | 2.25 | 2.28 | 0.68 | 1.32 | 0.35 |
| C₄-WT% | 4.27 | 4.84 | 7.42 | 7.32 | 3.21 | 5.58 | 1.55 |
| 110-140 C₅-230 110 WT% | 29.10 | 18.07 | 16.61 | 15.11 | 22.85 | 23.49 | 25.50 |
| (230-284 °F)(WT%) | 4.95 | 4.52 | 3.23 | 3.81 | 4.63 | 3.73 | 2.21 |
| 250°C(284-482 °F)(WT%) | 25.60 | 21.65 | 20.97 | 24.43 | 31.89 | 25.32 | 16.46 |
| 250°C(482 °F+)(WT%) | 33.65 | 48.13 | 49.18 | 46.76 | 36.16 | 40.27 | 53.43 |
| 250°C(482 °F+) | | | | | | | |
|   CLOUD PT,°C | -48.00 | -38.00 | -16.00 | -18.00 | -30.00 | -13.00 | 12.00 |
|   POUR PT, °C | -48.00 | -39.00 | -21.00 | -24.00 | -54.00 | -33.00 | 6.00 |
| Distillation, D86,LV% | | | | | | | |
|   START | 409.00 | 382.00 | 381.00 | 324.00 | 391.00 | 406.00 | 406.00 |
|   10 | 484.00 | 504.00 | 471.00 | 492.00 | 462.00 | 484.00 | 492.00 |
|   30 | 533.00 | 577.00 | 553.00 | 572.00 | 510.00 | 531.00 | 576.00 |
|   50 | 570.00 | 624.00 | 616.00 | 618.00 | 544.00 | 563.00 | 631.00 |
|   70 | 606.00 | 654.00 | 654.00 | 651.00 | 578.00 | 595.00 | 662.00 |
|   90 | 641.00 | 684.00 | 689.00 | 685.00 | 613.00 | 634.00 | 706.00 |
|   EP | 686.00 | 733.00 | 742.00 | 744.00 | 645.00 | 698.00 | 789.00 |

RCP = Recycle Point°C(°F)

EP 0 544 766 B1

Additionally, the middle distillates prepared by the process of this invention possess a viscosity of less than about 4 cSt at 40°C (104°F).

**Claims**

1. A process for preparing low pour point middle distillate hydrocarbons by hydrocracking and isomerizing a denitrogenated hydrocarbonaceous feedstock comprising 50 ppm or less nitrogen wherein at least 90% of said feedstock has a boiling point above 316°C (600°F), which process comprises:

   (a) contacting under hydrocracking conditions said hydrocarbonaceous feedstock with a large-pore hydrocracking catalyst, and a catalyst comprising a molecular sieve containing $AlO_2$ and $PO_2$ tetrahedral units and at least one hydrogenation component, wherein said molecular sieve is selected from (i) an intermediate pore size silicoaluminophosphate molecular sieve and (ii) an intermediate pore size nonzeolitic molecular sieve containing $AlO_2$ and $PO_2$ tetrahedral units; and
   (b) recovering a hydrocarbonaceous effluent wherein more than 40% by volume of said effluent boils above 149°C (300°F) and below 385°C (725°F) and has a pour point below -6.6°C (20°F).

2. The process of claim 1 wherein said intermediate pore size silicoaluminophosphate molecular sieve is selected from the group consisting of SAPO-11, SAPO-31 and SAPO-41.

3. The process of claim 1 wherein said hydrogenation component is selected from the group consisting of platinum, palladium, tungsten, vanadium, molybdenum, nickel, cobalt, chromium and manganese.

4. The process of claim 3 wherein said hydrogenation component is selected from the group consisting of platinum and palladium.

5. The process of claim 3 wherein said hydrogenation component is present in an amount of from 0.01% to 10% based on the weight of the molecular sieve.

6. The process of claim 4 wherein said hydrogenation component is present in an amount of from 0.1% to 1.5% based on the weight of the molecular sieve.

7. The process of claim 1 wherein said process is conducted at a temperature of from 260°C to 482°C, a pressure of from 1.5 to 20.8 MPa (200 psig to 3000 psig), a liquid hourly space velocity of from about 0.1 $hr^{-1}$ to about 20 $hr^{-1}$, and a hydrogen circulation rate of from 71 to 2670 standard cubic metres per cubic metre (400 to 15,000 SCF/bbl).

8. The process of claim 1 wherein said catalyst further comprises an inorganic oxide matrix.

9. The process of claim 8 wherein said matrix is alumina.

10. The process of claim 1 wherein said feedstock is a gas oil.

11. The process of claim 1 wherein said feedstock has a content of nitrogen-containing impurities, calculated as nitrogen, which is below 10 ppmw.

12. The process of claim 1 wherein said hydrocarbon feedstock is selected from the group consisting of petroleum distillates, vacuum gas oils, solvent deasphalted residua, and shale oils.

13. The process of claim 1 wherein greater than 50% by weight of converted product boils above 149°C (300°F) and below 385°C (725°F).

14. The process of claim 1 wherein said hydrocracking catalyst is nonzeolitic.

15. The process of claim 1 wherein said process is carried out by combining said catalyst comprising said intermediate pore size silicoaluminophosphate molecular sieve with said hydrocracking catalyst in a layered bed.

16. The process of claim 1 wherein said process is carried out by combining said catalyst comprising an intermediate pore size silicoaluminophosphate molecular sieve with said hydrocracking catalyst in a mixed bed.

17. The process of claim 16 wherein said hydrocracking catalyst is layered over said catalyst comprising an intermediate pore size silicoaluminophosphate molecular sieve with said hydrocracking catalyst in said bed.

18. The process of claim 1 wherein said catalyst comprising an intermediate pore size silicoaluminophosphate molecular sieve is incorporated into said hydrocracking catalyst.

19. The process of claim 1 wherein said catalyst comprising an intermediate pore size molecular sieve and said hydrocracking catalyst are incorporated into one catalyst.

20. The process of claim 1 wherein the weight ratio of said hydrocracking catalyst to the catalyst comprising said silicoaluminophosphate molecular sieve is from 1:5 to 20:1.

21. The process of claim 1 wherein the effluent boiling above 148°C (300°F) and below 385°C (725°F) has a viscosity at 40°C (104°F) of about 20cSt or less.

22. The process of claim 1 further comprising the step of recovering from step a) a hydrocarbonaceous effluent having a boiling point above 385°C (725°F).

23. The process of claim 22 wherein said hydrocarbonaceous effluent having a boiling point above 385°C (725°F) is recycled into the feedstock prior to the contacting of said feedstock with said hydrocracking catalyst and said catalyst comprising an intermediate pore size silicoaluminophosphate molecular sieve and at least one hydrogenation component.


**Patentansprüche**

1. Verfahren zur Herstellung von Mitteldestillat-Kohlenwasserstoffen mit niedrigem Fließpunkt durch Hydrocracken und Isomerisieren eines denitrogenierten kohlenwasserstoffhaltigen Ausgangsmaterials mit 50 ppm oder weniger Stickstoff, wobei mindestens 90% des Ausgangsmaterials einen Siedepunkt von über 316°C (600°F) hat, umfassend:

   (a) das Kontaktieren des kohlenwasserstoffhaltigen Ausgangsmaterials unter Hydrocrack-Bedingungen mit einem großporigen Hydrocrack-Katalysator und einem Katalysator, der ein Molekularsieb aufweist, das $AlO_2$- und $PO_2$-Tetraedereinheiten und mindestens eine Hydrierungskomponente enthält, wobei das Molekularsieb ausgewählt ist aus (i) einem mittelporigen Silicoalumophosphat-Molekularsieb und (ii) einem mittelporigen nicht-zeolithischen Molekularsieb, das $AlO_2$- und $PO_2$-Tetraedereinheiten enthält, und
   (b) Gewinnen eines Kohlenwasserstoff-Abstroms, in dem mehr als 40 Vol.% über 149°C (300°F) und unter 385°C (725°F) sieden und der einen Fließpunkt unter -6,6°C (20°F) hat.

2. Verfahren nach Anspruch 1, wobei das mittelporige Silicoalumophosphat-Molekularsieb ausgewählt ist aus der Gruppe, bestehend aus SAPO-11, SAPO-31 und SAPO-41.

3. Verfahren nach Anspruch 1, wobei die Hydrierungskomponente ausgewählt ist aus der Gruppe, bestehend aus Platin, Palladium, Wolfram, Vanadium, Molybdän, Nickel, Kobalt, Chrom und Mangan.

4. Verfahren nach Anspruch 3, wobei die Hydrierungskomponente ausgewählt ist aus der Gruppe, bestehend aus Platin und Palladium.

5. Verfahren nach Anspruch 3, wobei die Hydrierungskomponente in einer Menge von 0,01 Gew.% bis 10 Gew.% des Molekularsiebes vorliegt.

6. Verfahren nach Anspruch 4, wobei die Hydrierungskomponente in einer Menge von 0,1 Gew.% bis 1,5 Gew.% des Molekularsiebes vorliegt.

7. Verfahren nach Anspruch 1, wobei das Verfahren bei einer Temperatur von 260°C bis 482°C, einem Druck von 1,5 bis 20,8 MPa (200 psig bis 3000 psig), einer Flüssigkeits-Raumstundengeschwindigkeit von etwa 0,1 Std.$^{-1}$ bis etwa 20 Std.$^{-1}$, und einer Wasserstoff-Rückführung von 71 bis 2670 Standard-Kubikmeter pro Kubikmeter (400 bis 15000 SCF/bbl) erfolgt.

8. Verfahren nach Anspruch 1, wobei der Katalysator ferner eine Matrix aus anorganischem Oxid umfaßt.

9. Verfahren nach Anspruch 8, wobei diese Matrix Aluminiumoxid ist.

10. Verfahren nach Anspruch 1, wobei das Ausgangsmaterial ein Gasöl ist.

11. Verfahren nach Anspruch 1, wobei das Ausgangsmaterial einen Gehalt an stickstoffhaltigen Verunreinigungen von unter 10 ppmw, bezogen auf den Stickstoff, hat.

12. Verfahren nach Anspruch 1, wobei das Kohlenwasserstoff- Ausgangsmaterial ausgewählt ist aus der Gruppe, bestehend aus Petroleumdestillaten, Vakuumgasölen, lösungsmitteldeasphaltierten Rückständen und Schieferölen.

13. Verfahren nach Anspruch 1, wobei mehr als 50 Gew.% des umgewandelten Produktes über 149°C (300°F) und unter 385°C (725°F) sieden.

14. Verfahren nach Anspruch 1, wobei der Hydrocrack-Katalysator nicht-zeolithisch ist.

15. Verfahren nach Anspruch 1, wobei das Verfahren erfolgt durch Kombinieren des Katalysators, der das mittelporige Silicoalumophosphat-Molekularsieb umfaßt, in einem Schichtbett mit dem Hydrocrack-Katalysator.

16. Verfahren nach Anspruch 1, wobei das Verfahren erfolgt durch Kombinieren des Katalysators, der ein mittelporiges Silicoalumophosphat-Molekularsieb umfaßt, in einem Mischbett mit dem Hydrocrack-Katalysator.

17. Verfahren nach Anspruch 16, wobei der Hydrocrack-Katalysator geschichtet wird über den Katalysator, der ein mittelporiges Silicoalumophosphat-Molekularsieb umfaßt, wobei sich der Hydrocrack-Katalysator in dem Bett befindet.

18. Verfahren nach Anspruch 1, wobei der Katalysator, der ein mittelporiges Silicoalumophosphat-Molekularsieb umfaßt, in dem Hydrocrack-Katalysator inkorporiert ist.

19. Verfahren nach Anspruch 1, wobei der Katalysator, der ein mittelporiges Molekularsieb umfaßt, und der Hydrocrack-Katalysator in einem Katalysator inkorporiert sind.

20. Verfahren nach Anspruch 1, wobei das Gewichtsverhältnis des Hydrocrack-Katalysators zu dem Katalysator, der das Silicoalumophosphat-Molekularsieb umfaßt, 1:5 bis 20:1 beträgt.

21. Verfahren nach Anspruch 1, wobei der Abstrom bei über 149°C (300°F) und unter 385°C (725°F) siedet und bei 40°C (104°F) eine Viskosität von etwa 20 cSt oder weniger hat.

22. Verfahren nach Anspruch 1, das zudem den Schritt umfaßte Gewinnen aus Schritt a) eines kohlenwasserstoffhaltigen Abstroms mit einem Siedepunkt über 385°C (725°F).

23. Verfahren nach Anspruch 22, wobei der kohlenwasserstoffhaltige Abstrom mit einem Siedepunkt über 385°C (725°F) in das Ausgangsmaterial rückgeführt wird, bevor das Ausgangsmaterial mit dem Hydrocrack-Katalysator und dem Katalysator, der das mittelporige Silicoalumophosphat-Molekularsieb und mindestens eine Hydrierungskomponete umfaßt, kontaktiert wird.

## Revendications

1. Procédé pour préparer des hydrocarbures de distillats moyens à bas point d'écoulement par hydrocraquage et isomérisation d'une charge hydrocarbonée désazotée d'alimentation comprenant une quantité égale ou inférieure à 50 ppm d'azote, dans lequel au moins 90 % de ladite charge d'alimentation ont un point d'ébullition supérieur à 316°C (600°F), procédé qui comprend les étapes consistant :

(a) à mettre en contact dans des conditions d'hydrocraquage ladite charge hydrocarbonée d'alimentation avec un catalyseur d'hydrocraquage à larges pores, et un catalyseur comprenant un tamis moléculaire contenant des motifs tétraédriques $AlO_2$ et $PO_2$ et au moins un constituant d'hydrogénation, ledit tamis moléculaire étant choisi entre (i) un tamis moléculaire du type silico-aluminophosphate à diamètre des pores intermédiaire et (ii) un tamis moléculaire non zéolitique à diamètre des pores intermédiaire contenant des motifs tétraédriques $AlO_2$ et $PO_2$ ;

(b) à recueillir un effluent hydrocarboné dans lequel plus de 40 % en volume dudit effluent ont un point d'ébullition supérieur à 149°C (300°F) et inférieur à 385°C (725°F) et ont un point d'écoulement inférieur à -6,6°C (20°F).

2. Procédé suivant la revendication 1, dans lequel le tamis moléculaire du type silico-aluminophosphate à diamètre des pores intermédiaire est choisi dans le groupe consistant en SAPO-11, SAPO-31 et SAPO-41.

3. Procédé suivant la revendication 1, dans lequel le constituant d'hydrogénation est choisi dans le groupe consistant en platine, palladium, tungstène, vanadium, molybdène, nickel, cobalt, chrome et manganèse.

4. Procédé suivant la revendication 3, dans lequel le constituant d'hydrogénation est choisi dans le groupe consistant en platine et palladium.

5. Procédé suivant la revendication 3, dans lequel le constituant d'hydrogénation est présent en une quantité de 0,01 % à 10 % sur la base du poids du tamis moléculaire.

6. Procédé suivant la revendication 4, dans lequel le constituant d'hydrogénation est présent en une quantité de 0,1 % à 1,5 % sur la base du poids du tamis moléculaire.

7. Procédé suivant la revendication 1, qui est mis en oeuvre à une température de 260°C à 482°C, une pression de 1,5 à 20,8 MPa (200 psig à 3000 psig), une vitesse spatiale horaire de liquide d'environ 0,1 $h^{-1}$ à environ 20 $h^{-1}$ et une vitesse de circulation d'hydrogène de 71 à 2670 mètres cubes standards/mètre cube (400 à 15 000 SCF/bbl).

8. Procédé suivant la revendication 1, dans lequel le catalyseur comprend en outre une matrice constituée d'un oxyde inorganique.

9. Procédé suivant la revendication 8, dans lequel la matrice consiste en alumine.

10. Procédé suivant la revendication 1, dans lequel la charge d'alimentation est un gasoil.

11. Procédé suivant la revendication 1, dans lequel la charge d'alimentation a une teneur en impuretés azotées, calculée sur la base de l'azote, qui est inférieure à 10 ppmp.

12. Procédé suivant la revendication 1, dans lequel la charge hydrocarbonée est choisie dans le groupe consistant en distillats de pétrole, gasoils sous vide, résidus désalphaltés avec un solvant et huiles de schistes.

13. Procédé suivant la revendication 1, dans lequel plus de 50 % en poids du produit de conversion ont un point d'ébullition supérieur à 149°C (300°F) et inférieur à 385°C (725°F).

14. Procédé suivant la revendication 1, dans lequel le catalyseur d'hydrocraquage est un catalyseur non zéolitique.

15. Procédé suivant la revendication 1, qui est mis en oeuvre en associant le catalyseur comprenant un tamis moléculaire du type silico-aluminophosphate à diamètre des pores intermédiaire avec le catalyseur d'hydrocraquage dans un lit stratifié.

16. Procédé suivant la revendication 1, qui est mis en oeuvre en associant le catalyseur comprenant un tamis moléculaire du type silico-aluminophosphate à diamètre des pores intermédiaire avec le catalyseur d'hydrocraquage dans un lit mixte.

17. Procédé suivant la revendication 16, dans lequel le catalyseur d'hydrocraquage est stratifié sur le catalyseur comprenant un tamis moléculaire du type silico-aluminophosphate à diamètre des pores intermédiaire avec ledit catalyseur d'hydrocraquage dans ledit lit.

18. Procédé suivant la revendication 1, dans lequel le catalyseur comprenant un tamis moléculaire du type silico-aluminophosphate à diamètre des pores intermédiaire est incorporé audit catalyseur d'hydrocraquage.

19. Procédé suivant la revendication 1, dans lequel le catalyseur comprenant un tamis moléculaire à diamètre des pores intermédiaire et le catalyseur d'hydrocraquage sont incorporés en un même catalyseur.

20. Procédé suivant la revendication 1, dans lequel le rapport pondéral du catalyseur d'hydrocraquage au catalyseur comprenant le tamis moléculaire du type silico-aluminophosphate est compris dans l'intervalle de 1:5 à 20:1.

21. Procédé suivant la revendication 1, dans lequel l'effluent ayant un point d'ébullition supérieur à 149°C (300°F) et inférieur à 385°C (725°F) a une viscosité à 40°C (104°F) égale ou inférieure à environ 20 cSt.

22. Procédé suivant la revendication 1, comprenant en outre l'étape consistant à recueillir à l'étape (a) un effluent hydrocarboné ayant un point d'ébullition supérieur à 385°C (725°F).

23. Procédé suivant la revendication 22, dans lequel l'effluent hydrocarboné ayant un point d'ébullition supérieur à 385°C (725°C) est recyclé dans la charge d'alimentation avant la mise en contact de ladite charge d'alimentation avec le catalyseur d'hydrocraquage et ledit catalyseur comprenant un tamis moléculaire du type silico-aluminophosphate à diamètre des pores intermédiaire et au moins un constituant d'hydrogénation.

FIG. 1

FIG. 2

EFFECT OF DIESEL YIELD ON CLOUD POINT

FIG._3

EP 0 544 766 B1